# EUROPEAN PATENT APPLICATION

(11) **EP 4 841 942 A1**
(43) Date of publication of application: **18.11.2026**
(21) Application number: 25177014.5
(22) Date of filing: 16.05.2025
(51) Int. Cl.: H04L 12/10, H04L 12/40

(54) **METHOD AND SYSTEM FOR CONTROLLING POWER USAGE IN A POWER OVER ETHERNET SYSTEM**

(71) Applicant: Axis AB, 223 69 Lund (SE)
(72) Inventor: Jordow, Peter, 223 69 LUND (SE); Huusko, Alexander, 223 69 LUND (SE)
(74) Representative: AWA Sweden AB

(57) **Abstract**

The present disclosure relates to a method of controlling power usage in a powered device supplied by a power sourcing equipment in a Power over Ethernet system, the method comprising: performing a power negotiation between the power sourcing equipment and the powered device to determine an initial power budget, wherein the initial power budget accounts for assumed transmission and/or conversion losses between the power sourcing equipment and the powered device; drawing power from the power sourcing equipment to the powered device within the initial power budget; measuring, at the power sourcing equipment, an output power supplied to the powered device; measuring, at the powered device, an actual power consumption in the powered device; calculating a power efficiency ratio between the output power and the actual power consumption; setting an adjusted power budget for the powered device by scaling the initial power budget using the power efficiency ratio; and drawing power from the power sourcing equipment to the powered device within the adjusted power budget. The disclosure further relates to a system for controlling power usage in a powered device supplied by a power sourcing equipment in a Power over Ethernet system and to a powered device for use in a Power over Ethernet system.

## Description

The present disclosure relates to a method of controlling power usage in a powered device supplied by a power sourcing equipment in a Power over Ethernet system. The disclosure further relates to a corresponding system for controlling power usage and to a powered device for use in a Power over Ethernet system.

### Background

Power over Ethernet (PoE) technology enables the delivery of electrical power and data over an Ethernet cable, eliminating the need for separate power sources for network-connected devices such as surveillance cameras. The IEEE 802.3 PoE standards define multiple power levels, allowing power sourcing equipment (PSE) to negotiate and allocate a power budget to powered devices (PDs). After this negotiation, the PD typically reserves a portion of the total available power to account for transmission losses in the Ethernet cable, ensuring that the PD will not draw more power than allowed. This reservation is based on worst-case assumptions, such as a cable length of up to 100 meters, which can lead to conservative power allocations.

While this approach ensures reliable operation under all conditions, it can also result in inefficiencies. In practical deployments, the power losses are often lower than the reserved amount. Consequently, the PD may receive a lower power budget than it could safely utilize, leading to underutilization of available power. This may be problematic, for example, in applications where power demand fluctuates based on environmental conditions. For example, a camera with integrated heaters may allocate a significant portion of its power budget to heating during cold conditions, leaving insufficient power for critical functions such as infrared illumination in some scenarios. Conventional reservation of power can lead to suboptimal performance.

It is therefore an objective of the present disclosure to provide an improved method and system for controlling power usage in a powered device supplied by a power sourcing equipment in a Power over Ethernet system. The objective includes enabling more efficient use of available power while ensuring that the powered device operates reliably under varying conditions. Additionally, it is an objective to prevent unnecessary power restrictions that may impact device performance and to improve the accuracy of power allocation in practical deployments.

### Summary

The present disclosure relates to a method of controlling power usage in a powered device supplied by a power sourcing equipment in a Power over Ethernet system, the method comprising performing a power negotiation between the power sourcing equipment and the powered device to determine an initial power budget, wherein the initial power budget accounts for assumed transmission and/or conversion losses between the power sourcing equipment and the powered device; drawing power from the power sourcing equipment to the powered device within the initial power budget; measuring, at the power sourcing equipment, an output power supplied to the powered device; measuring, at the powered device, an actual power consumption in the powered device; calculating a power efficiency ratio between the output power and the actual power consumption; setting an adjusted power budget for the powered device by scaling the initial power budget using the power efficiency ratio; and drawing power from the power sourcing equipment to the powered device within the adjusted power budget.

The disclosed method provides a more accurate and dynamic approach to power budget management in Power over Ethernet systems by measuring both the power supplied by the power sourcing equipment and the actual power consumed by the powered device. By comparing these measurements, a power efficiency ratio can be calculated, which allows the power budget of the powered device to be adjusted based on real-world conditions rather than conservative predefined assumptions. This adjustment accounts for actual transmission losses, reducing the need for worst-case power reservations and enabling the powered device to utilize a higher power budget when conditions allow.

In practical implementations, the power sourcing equipment may continuously or periodically transmit power supply measurements, i.e. the actual power provided by the power sourcing equipment, to the powered device. The powered device then compares this information with its own actual internal power consumption measurement to determine the power efficiency ratio. The calculated ratio is used to adjust the power budget of the powered device, bringing it closer to the actual available power. This approach eliminates the need to statically reserve power for potential losses, instead compensating dynamically based on measured efficiency. As a result, the powered device can access a greater portion of the available power when transmission losses are lower than initially assumed, without exceeding safe operating limits.

The method may be advantageous in scenarios where power requirements fluctuate due to environmental or operational conditions. For example, in a surveillance camera system, power-consuming functions such as infrared illumination and heating elements may have varying energy demands depending on temperature and lighting conditions. By dynamically adjusting the power budget based on actual efficiency measurements, the method ensures that power allocation is optimized while maintaining reliability. Furthermore, in deployments where cable quality or length deviates from standard assumptions, the disclosed method can prevent device shutdowns due to excessive power draw, thereby improving overall system robustness.

The disclosed method can be implemented in various Power over Ethernet architectures, including midspan configurations, and is compatible with existing power negotiation protocols defined by IEEE 802.3 standards. By refining the power budget dynamically based on real-time measurements, the method allows powered devices to operate within safe limits while maximizing available power under practical deployment conditions.

The present disclosure further relates to a corresponding system for controlling power usage in a powered device supplied by a power sourcing equipment in a Power over Ethernet system, comprising a power sourcing equipment configured to supply power to the powered device and to perform a power negotiation with the powered device to determine an initial power budget, wherein the initial power budget accounts for assumed transmission and/or conversion losses between the power sourcing equipment and the powered device; a PSE power measurement unit in the power sourcing equipment configured to measure an output power supplied to the powered device; a PD power measurement unit in the powered device configured to measure an actual power consumption in the powered device; a processing unit configured to configure the powered device to draw power from the power sourcing equipment within the initial power budget; calculate a power efficiency ratio between the output power and the actual power consumption; set an adjusted power budget for the powered device by scaling the initial power budget using the power efficiency ratio; and configure the powered device to draw power from the power sourcing equipment within the adjusted power budget.

The disclosed system provides a technical framework for dynamically managing power allocation in Power over Ethernet systems by incorporating power measurement at both the power sourcing equipment and the powered device.

In one embodiment, the power sourcing equipment may include a communication interface configured to transmit power measurement data to the powered device. This allows the powered device to receive information about the power supplied and compare it with its internal power consumption measurements. Based on this comparison, the processing unit of the powered device can determine an adjusted power budget that more accurately corresponds to the available power while maintaining safe operating limits. The system may further be configured to update the power budget iteratively, either at fixed intervals or in response to detected deviations exceeding a predefined threshold.

The disclosure further relates to a powered device for use in a Power over Ethernet system, the powered device comprising: a power interface configured to receive power from a power sourcing equipment and to participate in a power negotiation with the power sourcing equipment to determine an initial power budget, wherein the initial power budget accounts for assumed transmission and/or conversion losses between the power sourcing equipment and the powered device; a PD power measurement unit configured to measure an actual power consumption in the powered device; a processing unit configured to: configure the powered device to draw power from the power sourcing equipment within the initial power budget; receive a measurement of an output power supplied to the powered device from the power sourcing equipment calculate a power efficiency ratio between the output power and the actual power consumption; set an adjusted power budget for the powered device by scaling the initial power budget using the power efficiency ratio; and configure the powered device to draw power from the power sourcing equipment within the adjusted power budget.

### Description of drawings

Various embodiments are described hereinafter with reference to the drawings. The drawings are examples of embodiments and are intended to illustrate some of the features of the presently disclosed method and system for controlling power usage in a Power over Ethernet system.
Fig. 1 shows an example of a flow chart of the presently disclosed method of controlling power usage in a powered device supplied by a power sourcing equipment in a Power over Ethernet system.
Fig. 2 shows an embodiment of the presently disclosed system for controlling power usage in a powered device supplied by a power sourcing equipment in a Power over Ethernet system.
Fig. 3 shows an example of a power configuration of a PoE cable implementation with 8 pins and 8 wires.
Fig. 4 shows an example of a powered device in the form of a camera system and a power sourcing equipment in the form of a midspan device.

### Detailed description

The present disclosure relates to a method of controlling power usage in a powered device supplied by a power sourcing equipment in a Power over Ethernet system.

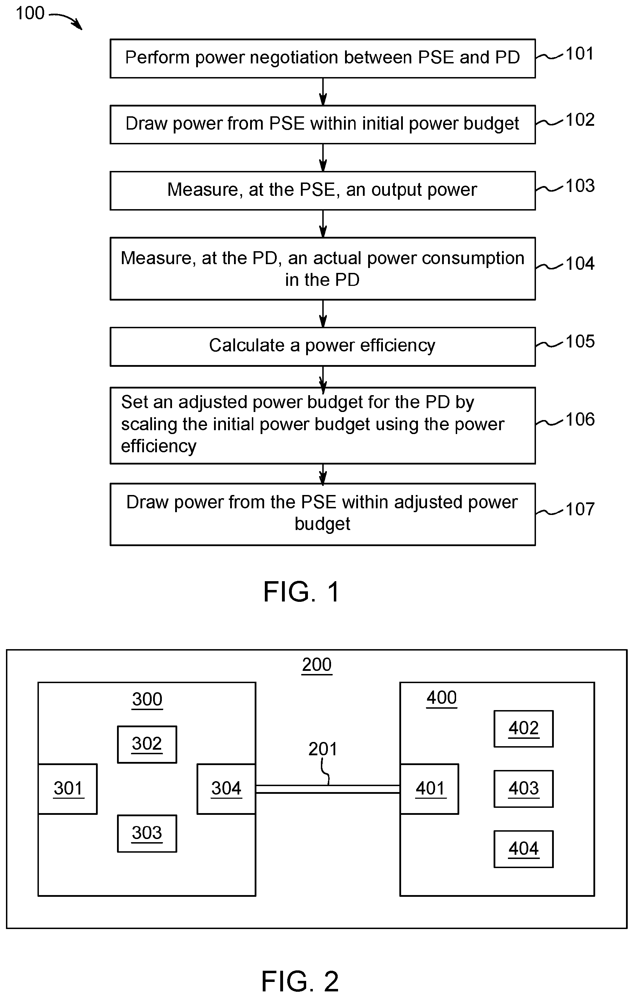

Fig. 1 illustrates an example flowchart of the method 100 for controlling power usage in a powered device supplied by a power sourcing equipment in a Power over Ethernet (PoE) system. The method begins with performing a power negotiation 101 between the power sourcing equipment and the powered device to determine an initial power budget. The initial power budget accounts for assumed transmission and/or conversion losses between the power sourcing equipment and the powered device. After negotiation, the method proceeds with drawing power from the power sourcing equipment to the powered device within the initial power budget 102. This ensures that the powered device operates within the constraints defined during negotiation. The next step involves measuring an output power at the power sourcing equipment 103, which corresponds to the power supplied before transmission losses occur. Subsequently, measuring an actual power consumption at the powered device 104 provides a reading of the power effectively used after accounting for transmission and conversion losses. A power efficiency ratio is then calculated 105 based on the measurements taken at the power sourcing equipment and the powered device. The power efficiency ratio serves as a metric for determining the actual power loss in the system and provides a basis for adjusting the power budget accordingly. Using the power efficiency ratio, the method proceeds to set an adjusted power budget 106, which replaces the initial power budget with a refined power allocation that more accurately reflects real-world conditions. The adjusted power budget may allow the powered device to use additional power if losses are lower than assumed, or it may limit power consumption to prevent excessive draw in cases where transmission losses are higher than expected. Finally, the method includes drawing power from the power sourcing equipment to the powered device within the adjusted power budget 107, ensuring that the powered device operates within the newly set limits based on actual power efficiency.

The method includes the step of performing a power negotiation between the power sourcing equipment and the powered device to determine an initial power budget, wherein the initial power budget accounts for assumed transmission and/or conversion losses between the power sourcing equipment and the powered device. The power negotiation may be carried out using a communication protocol defined in the Power over Ethernet standard, where the power sourcing equipment assigns a power level to the powered device based on predefined power classes. The term 'power negotiation' is generally considered to be known by a person skilled in the art in the field. The power negotiation serves to establish a power allocation agreement between the power sourcing equipment and the powered device, ensuring that the powered device receives an appropriate level of power within the constraints of the Power over Ethernet system. The initial power budget may be assigned through a power negotiation process between the power sourcing equipment and the powered device in accordance with a Power over Ethernet standard. The power negotiation may involve an explicit exchange of power classification signals between the power sourcing equipment and the powered device, where the powered device indicates its power requirements and the power sourcing equipment responds by assigning a power budget based on predefined power classes. This process may be performed in accordance with a standardized communication protocol, such as the classification procedure defined in any of IEEE 802.3af, IEEE 802.3at (PoE+), or IEEE 802.3bt (PoE++). The classification may be performed using physical layer signaling or through higher-layer communication protocols or a combination.

In some embodiments, the power negotiation may be predefined or implicit, such as when a powered device is connected to a power sourcing equipment that follows a fixed power allocation scheme. For example, the power sourcing equipment may automatically assign a maximum allowable power budget based on the detected powered device type or based on default settings programmed in the power sourcing equipment. The negotiation may also be based on historical data or stored configurations, where a powered device is recognized by the power sourcing equipment based on prior interactions, allowing the system to recall and apply a previously determined power budget.

A 'power budget', for example the abovementioned 'initial power budget', may comprise an initial PSE power budget and a corresponding initial PD power budget. The initial PSE power budget may indicate what the power sourcing equipment may have to supply. The corresponding initial PD power budget may indicate how much power the powered device may consume. If, for example, the power sourcing equipment and the powered device negotiate a PoE Class 6 power budget, the initial PSE power budget may be 60 W and the initial PD power budget 51 W according to the predefined standard.

The initial PD power budget determined during the power negotiation may represent an initial maximum power limit for the PD, ensuring that the powered device does not exceed the allocated power while operating within expected conditions. This budget typically includes a predefined power loss margin, accounting for expected transmission losses in the Ethernet cable.

The method further includes the step of drawing power from the power sourcing equipment to the powered device within the initial power budget for the powered device. The powered device may consume power in accordance with its operational requirements while ensuring that the total power consumption does not exceed the assigned initial power budget, more particularly not exceeding the initial PD power budget of the initial power budget. The term 'within the power budget', whether it refers to an initial power budget or an adjusted power budget, within the context of the present disclosure, means that the power that is drawn does not exceed an assigned upper limit.

The method further includes measuring, at the power sourcing equipment, an output power supplied to the powered device. This measurement represents the power delivered by the power sourcing equipment before any transmission losses in the Ethernet cable occur. The power sourcing equipment provides electrical power to the powered device over Ethernet cabling, and the measured output power corresponds to the amount of power actively being sourced at the point of transmission.

The measurement may be performed using a power sensing circuit or monitoring system integrated into the power sourcing equipment, which determines the power delivered at the output stage of the power supply. This measurement does not account for any subsequent transmission losses in the Ethernet cable, conversion inefficiencies, or variations in power consumption at the powered device. Instead, it provides an indication of the total power being sourced at the power sourcing equipment side before the power reaches the powered device.

The method further includes measuring, at the powered device, an actual power consumption in the powered device. This measurement represents the power that is actually used by the powered device after transmission losses. The power measurement unit in the powered device may include a sensing circuit that determines the power drawn by various functional components of the powered device.

The method further comprises calculating a power efficiency ratio between the output power from the power sourcing equipment and the actual power consumption in the powered device. The power efficiency ratio may be determined, for example, by dividing the actual power consumption at the powered device by the power supplied from the power sourcing equipment. This power efficiency ratio provides a measure of how much of the supplied power is effectively utilized by the powered device and can be used as an indicator of transmission and conversion losses.

The method includes setting an adjusted power budget for the powered device by scaling the initial power budget using the power efficiency ratio. The adjustment may involve multiplying the initial PSE power budget by the calculated power efficiency ratio to determine an updated power limit for the powered device that more accurately corresponds to the available power. In one embodiment, the adjusted power budget for the powered device is determined by multiplying the initial PSE power budget by the power efficiency ratio. This approach allows the powered device to utilize a higher power budget when transmission losses are lower than initially assumed, thereby optimizing power allocation. If transmission losses are higher than the maximum loss assumed in the standard, the method will prevent the powered device from exceeding the maximum power drawn from the power sourcing equipment, which could otherwise cause the system to shut off.

The term "scaling" as used herein, may be, but is not limited to, direct multiplication. In other embodiments, scaling may involve performing a proportional adjustment using a lookup table or other data structure that maps predefined combinations of initial power budget values and power efficiency ratios to corresponding adjusted power budgets. Such a lookup table may be implemented to support efficient or hardware-constrained processing, or to include predefined safety margins or discretized adjustment steps. The term "scaling" is intended to broadly encompass any functionally equivalent operation that adjusts the initial power budget in dependence on the power efficiency ratio, whether performed arithmetically, algorithmically, by referencing stored associations, or through interpolation between discrete values. In some implementations, the scaled value may be further modified by applying constraints such as maximum thresholds, rounding, or compensation factors based on environmental conditions or predefined policy limits.

The method may include setting an adjusted power budget for the powered device by scaling the initial power budget using the power efficiency ratio. The adjusted power budget represents a refined power allocation that better corresponds to the actual power conditions, ensuring that the powered device can utilize available power efficiently while staying within safe operational limits.

The adjusted power budget is determined based on the relationship between the power delivered at the power sourcing equipment and the actual power consumption at the powered device. This adjustment accounts for variations in transmission efficiency and ensures that the powered device receives a power allocation that more accurately reflects its real-world energy requirements.

In one example, the adjusted power budget is calculated as: ${B}_{adj} = \frac{{P}_{D}}{{P}_{PSE}} ∗ {B}_{init PSE}$ where B_{adj} is the adjusted power budget for the powered device, P_{PSE} is the power measured at the power sourcing equipment before transmission losses, P_{PD} is the actual power consumption measured at the powered device, B_{init PSE} is the initial PSE power budget corresponding to the assigned PoE class. In this example B_{init PSE} represents the negotiated power at the PSE.

In one example, which can be used for illustrative purposes, the power sourcing equipment and the powered device negotiate a PoE Class 6 budget, according to which the the PSE is configured to supply up to 60 W, and the PD is permitted to consume up to 51 W, assuming predefined loss. B_{init PSE} is hence 60 W.

Once the powered device begins drawing power within the initial power budget, the system measures the actual power consumption at the PD = 50 W and the output power at the PSE = 52 W. The actual power loss is hence 2 W and the power efficiency ratio = 0.96.

Accordingly, B_{adj} can be calculated as B_{adj} = 0.96 * 60 W = 57.6 W, which allows the powered device to access more power than the conservative initial allocation.

In some implementations, a safety margin may be applied to the adjusted power budget to prevent exceeding system constraints. For instance, the adjusted power budget may be further adjusted to include a threshold, such as a predefined threshold or a threshold expressed as a percentage of the adjusted power, to ensure safe operation even if transmission conditions fluctuate over time.

As a person skilled in the art would realize, the scaling of the initial bower budget is not limited to the above example but can be implemented in various ways. As shown in the example, the initial PSE power budget can be used. Similarly, it is possible to scale up the initial PD power budget, since the initial PD power budget and the initial PSE power budget typically have a known relation.

The method further comprises drawing power from the power sourcing equipment to the powered device within the adjusted power budget. The powered device may update its internal power allocation based on the adjusted power budget, enabling or disabling specific functions accordingly.

The initial power budget and the adjusted power budget may define upper limits for a power consumption. This means that they function as constraints that limit the maximum amount of power the powered device is allowed to consume. These budgets may therefore not prescribe a specific power draw but instead establish an upper boundary within which the powered device must operate.

The term 'power' represents measures of instantaneous or substantially instantaneous power consumption, preferably expressed in watts or an equivalent unit. Accordingly, the initial power budget and the adjusted power budget also represent measures of instantaneous power consumption. The method may thus ensure that power allocation is controlled in substantially real-time. The use of watts or an equivalent unit aligns with standard industry practices in Power over Ethernet systems, where power budgets are typically defined in terms of maximum allowable power draw at any given time. This ensures compatibility with existing PoE power classes, such as those defined in IEEE 802.3af, IEEE 802.3at, and IEEE 802.3bt, where power sourcing equipment allocates a maximum allowable power level in watts.

In one embodiment of the present disclosure, the step of drawing power from the power sourcing equipment to the powered device comprises enabling and disabling functions of the powered device based on their respective power requirements to maintain a total power consumption within the limits of the applicable one of the initial power budget or the adjusted power budget.

This embodiment provides a mechanism for dynamically managing power allocation among different functions of the powered device. It can be done in several ways. For example, individual or grouped functions of the powered device can be assigned power sub-budgets that together do not exceed the total power budget. Alternatively, or in combination, certain functions can be prioritized over others.

Since the total available power is constrained by the power budget, the powered device may be configured to prioritize certain functions over others depending on real-time power availability. This enables the device to maintain its core functionality while adapting its power usage dynamically. In one implementation, the powered device may include a power management system that continuously monitors the available power and determines which functions can be enabled without exceeding the allocated budget. If the power demand approaches the upper limit of the power budget, the system may selectively disable or reduce the power allocated to non-essential functions to prevent exceeding the power constraints.

For example, in a surveillance camera system, power-consuming functions may include image processing, infrared illumination, heating elements, pan-tilt-zoom (PTZ) motors, and network transmission modules. If the total power consumption is near the power budget limit, the system may temporarily disable or reduce infrared illumination. This type of dynamic power control ensures that critical functions, such as image capture and data transmission, are prioritized while still optimizing power usage. The method may also include a power prioritization scheme, where higher-priority functions are maintained as long as possible, while lower-priority functions are only activated if sufficient power is available.

In one embodiment, the method of controlling power comprises allocating power sub-budgets to a plurality of functions of the powered device, such that a total power allocated to the functions initially does not exceed the initial power budget, more precisely the initial PD power budget. The sub-budgets define how much power each function can use while ensuring that the sum of all sub-budgets does not exceed the total initial power budget. The power sub-budgets may be predefined based on expected power consumption patterns or may be dynamically adjusted based on real-time conditions. For example, a camera system may allocate separate sub-budgets for its image sensor, processor, network module, and motorized components, ensuring that each component receives sufficient power while keeping total consumption within the initial power budget.

The power sub-budgets may be updated after setting the adjusted power budget such that the total power allocated to the functions does not exceed the adjusted power budget. Since the adjusted power budget reflects a more accurate estimate of the power available to the powered device, the method may further include updating the power sub-budgets accordingly. Since the adjusted power budget provides an updated total power limit for the powered device, the power sub-budgets may be scaled accordingly to reflect the new available power while maintaining their original proportions. The purpose of this update is to ensure that all functions receive a proportionally larger or smaller share of power when the total available power changes, without modifying the relative power distribution among different functions. For example, if the initial power budget allocated to the powered device is 51 W, and the adjusted power budget for the powered device increases to 57.6 W, the individual power sub-budgets assigned to different functions within the powered device may be proportionally increased while ensuring that their sum does not exceed 57.6 W.

The same principle may be applied if the adjusted power budget is lower than the initial power budget, in which case all sub-budgets can be proportionally reduced to ensure that the total allocation remains within the updated limit.

In some instances, the sub-budgets may be adjusted non-proportionally. For instance, some functions may not operate properly if their sub-budgets are lowered, therefore necessitating a proportionally larger lowering of the sub-budget of one or more other functions. Similarly, some functions may have no use for a raised sub-budget, meaning other functions can get a proportionally larger increase of their sub-budgets.

The update process may be performed automatically by a power management system within the powered device, ensuring that real-time adjustments do not disrupt normal operation.

In one embodiment of the present disclosure, the steps of measuring the output power, measuring the actual power consumption, calculating the power efficiency ratio, setting the adjusted power budget, and drawing power in accordance with the adjusted power budget are performed iteratively during operation of the powered device. This allows for continuous optimization of power allocation by performing power measurements and budget adjustments iteratively rather than as a one-time process. By periodically re-evaluating power efficiency, the method ensures that the power budget reflects actual operating conditions rather than relying on assumptions made during the initial power negotiation. This iterative approach accommodates variations in power loss due to changes in environmental factors, cable conditions, or operational states of the powered device. The iteration cycle may be implemented using different scheduling mechanisms, such as fixed intervals, event-based triggers, or adaptive time frames based on system behavior. The ability to adjust the power budget dynamically allows for improved efficiency and reliability while ensuring that the powered device operates within safe power limits.

In one embodiment, the steps of measuring the output power, measuring the actual power consumption, calculating the power efficiency ratio, and setting the adjusted power budget are performed at predetermined intervals. The predetermined intervals may be defined based on system requirements, such as every few seconds, minutes, or longer durations depending on the sensitivity of the system to power variations. A fixed interval approach ensures that the powered device adapts to gradual changes in power efficiency without requiring continuous processing.

The method may alternatively implement a continuous monitoring approach, where power measurements are performed in near real-time rather than at discrete intervals. In such implementations, the power measurement units in the power sourcing equipment and the powered device operate continuously, allowing for near-instantaneous detection of power fluctuations.

In one embodiment the step of setting the adjusted power budget is performed in response to detecting a change in the power efficiency ratio exceeding a predefined threshold. Rather than adjusting the power budget continuously, the method may use an event-driven approach, where power adjustments occur only when significant deviations in power efficiency are detected. A predefined threshold can be established to determine when a change in the power efficiency ratio is substantial enough to warrant a power budget adjustment. This approach minimizes unnecessary adjustments while ensuring that the power allocation responds appropriately to significant changes in power efficiency. The threshold may be defined as an absolute power difference, a percentage change, or a statistical deviation based on historical measurements. For example, if the power efficiency ratio remains stable within ±2%, no adjustments may be necessary. However, if a 5% or greater deviation is detected, indicating an unexpected increase or decrease in power loss, the adjusted power budget may be recalculated to reflect the new conditions.

By iterating the power measurement and adjustment steps, whether at fixed intervals, continuously, or based on significant changes, the method provides an adaptive power management system that optimizes power distribution without exceeding system constraints. The flexibility in iteration strategies allows for tailoring power control mechanisms based on specific application needs, ensuring efficient and reliable operation across different deployment scenarios.

The presently disclosed method may comprise the step of communicating the output power supplied to the powered device from the power sourcing equipment to the powered device. The communication of the output power measurement from the power sourcing equipment to the powered device enables the powered device to accurately assess the efficiency of power transmission and adjust its power usage accordingly.

The communication of the output power may be implemented using various techniques. In one implementation, the power sourcing equipment may use a predefined communication protocol such as Link Layer Discovery Protocol (LLDP) as defined in IEEE 802.3, which allows power-related data to be exchanged between the power sourcing equipment and the powered device over the Ethernet link. In another implementation, power data may be transmitted using customized data packets sent over the network connection between the power sourcing equipment and the powered device. The communication may occur periodically at fixed intervals, continuously in real-time, or upon request from the powered device, depending on the system configuration and power monitoring requirements. In some implementations, the communication may also include additional power-related parameters, such as current voltage levels, historical power measurements, or error conditions that indicate power delivery issues.

The initial power budget and the adjusted power budget may correspond to predefined power classes in a Power over Ethernet system. The presently disclosed method is applicable to Power over Ethernet (PoE) systems that classify powered devices into any suitable power class. A power class defines the maximum power that the power sourcing equipment can supply and the maximum power the powered device is allowed to draw. These classes are established according to, for example, IEEE 802.3 PoE standards, which specify different levels of power delivery to accommodate a wide range of powered devices with varying power requirements.

The classification process occurs during the power negotiation phase, where the powered device identifies itself to the power sourcing equipment and requests an appropriate power allocation. The power sourcing equipment then assigns a power budget corresponding to the selected power class. For example, under IEEE 802.3bt (PoE++), a Class 6 power sourcing equipment may initially allocate 60 W, while the powered device sets a PD power budget of 51 W to account for assumed transmission losses.

The power budget may accordingly determine an initial PSE power budget and an initial PD power budget, wherein the initial PSE power budget is 30W and the initial PD power budget is 25.5W, or wherein the initial PSE power budget is 45W and the initial PD power budget is 40W, or wherein the initial PSE power budget is 60W and the initial PD power budget is 51W, or wherein the initial PSE power budget is 75W and the initial PD power budget is 62W, or wherein the initial PSE power budget is 90W and the initial PD power budget is 71.3W.

The method may be applied across various PoE power classes, including but not limited to:
- IEEE 802.3af (PoE): Supports up to 15.4 W at the power sourcing equipment, with up to 12.95 W available for the powered device.
- IEEE 802.3at (PoE+): Supports up to 30 W at the power sourcing equipment, with up to 25.5 W available for the powered device.
- IEEE 802.3bt (PoE++) Type 3: Supports up to 60 W at the power sourcing equipment, with up to 51 W available for the powered device.
- IEEE 802.3bt (PoE++) Type 4: Supports up to 90 W at the power sourcing equipment, with up to 71.3 W available for the powered device.

The present disclosure further relates to a system for controlling power usage in a powered device supplied by a power sourcing equipment in a Power over Ethernet system. Fig. 2 shows an embodiment of the presently disclosed system 200 for controlling power usage in a powered device 400 supplied by a power sourcing equipment 300 in a Power over Ethernet system. The system 200 comprises a power sourcing equipment 300 configured to supply power to the powered device 400 over a network connection in accordance with a Power over Ethernet (PoE) system. The power sourcing equipment 300 supplies power and data over the Ethernet cable 201 to the powered device 400. The power sourcing equipment 300 includes an AC/DC converter 301, which converts mains power into a suitable DC voltage for Power over Ethernet operation. A Power over Ethernet manager module 302 is configured to control power negotiation, allocation, and monitoring, ensuring that the correct power budget is assigned to the powered device 400. To measure the power supplied, the power sourcing equipment 300 includes a PSE power measurement unit 303, which determines the output power before any transmission losses. The power sourcing equipment 300 further comprises a PSE Ethernet interface 304, which facilitates data communication with the powered device 400 and ensures that power and data signals are transmitted over the Ethernet cable 201. The Ethernet cable 201 connects to the powered device 400 via a PD Ethernet interface 401, which receives both power and data signals. Within the powered device 400, a processing unit 402 is configured to manage power allocation by calculating a power efficiency ratio based on received power data. The powered device 400 further includes a PD power measurement unit 403, which measures the actual power consumption of the device after transmission losses and conversion inefficiencies. The processing unit 402 utilizes the power efficiency ratio to set an adjusted power budget for the powered device, ensuring that it operates efficiently while maximizing power utilization within system constraints. The adjusted power budget is then used to regulate the operation of the power consuming unit 404, which may include various functional components such as image processing systems, communication modules, or motorized elements depending on the application of the powered device.

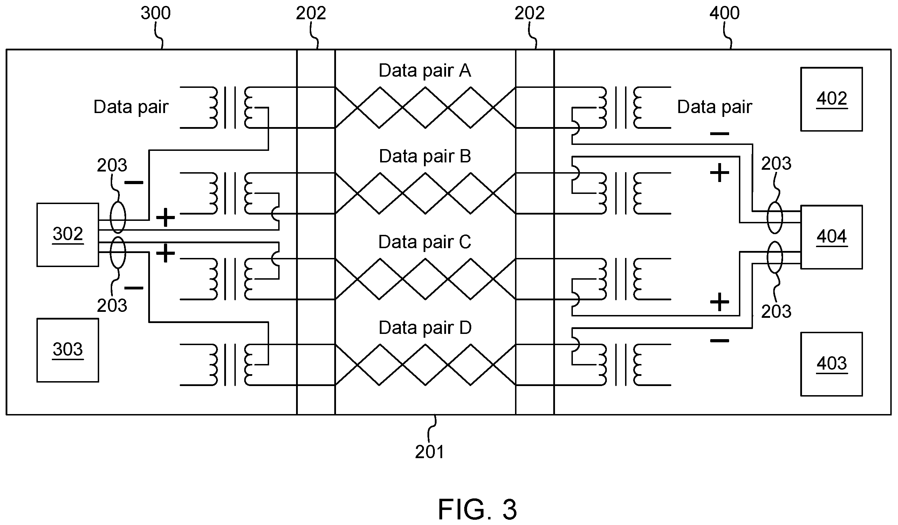

Fig. 3 shows an example of a power configuration of a PoE cable implementation with 8 pins and 8 wires, illustrating how power is transmitted between the power sourcing equipment 300 and the powered device 400 via an Ethernet cable 201. The Ethernet cable 201 connects to both the power sourcing equipment 300 and the powered device 400 through corresponding Ethernet sockets 202 at both ends. The PoE implementation utilizes PoE pairs 203, which define how power is distributed across the Ethernet cable conductors. The power sourcing equipment 300 includes a power over Ethernet manager module 302, which controls the power delivery process and ensures that the powered device 400 receives an appropriate power allocation. The PSE power measurement unit 303 is configured to measure the output power at the PSE side before transmission losses occur. At the powered device 400, the PD power measurement unit 403 is responsible for measuring the actual power consumption after transmission losses. The processing unit 402 in the powered device 400 is configured to process the measured power values and compute a power efficiency ratio to determine an adjusted power budget. This ensures that the power consuming unit 404, which represents the functional components of the powered device, operates within the allocated power constraints while making efficient use of the available power. The PoE pairs 203 illustrate how power is distributed across the 8-pin Ethernet cable, where specific wire pairs carry power while others primarily handle data transmission. Different PoE standards may utilize different wire pair configurations, with some implementations using the same pairs for power and data transmission and others using dedicated pairs for power delivery.

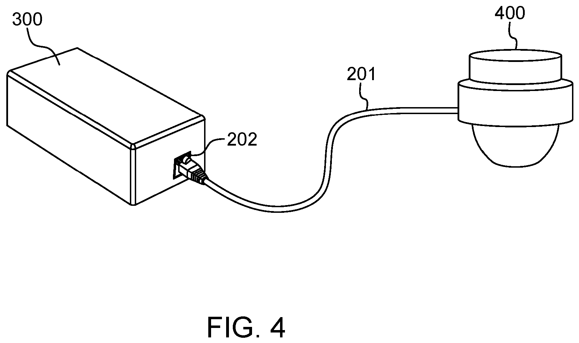

Fig. 4 shows a practical example of a powered device 400 in the form of a camera system and a power sourcing equipment 300 in the form of a midspan device, connected by an Ethernet cable 201. The Ethernet cable 201 facilitates both power transmission and data communication, enabling the powered device 400 to operate without requiring a separate power source. The Ethernet cable 201 is connected to the power sourcing equipment 300 and the powered device 400 via corresponding Ethernet sockets 202 at both ends. In this configuration, the power sourcing equipment 300 functions as a midspan device, meaning that it is an intermediary power injector placed between a non-PoE network switch and the powered device. The midspan device injects power into the Ethernet cable 201, allowing the powered device 400 to receive both power and data over a single cable. This is a common implementation in PoE-enabled camera systems. The powered device 400 in this example represents a surveillance camera system, which may include various functional components such as image processing modules, infrared illumination, or motorized pan-tilt-zoom (PTZ) controls. The power received through the Ethernet cable 201 is used to operate these components within the allocated power budget.

The power sourcing equipment and/or the powered device may further comprise peripheral components, such as one or more memories, which may be used for storing instructions executable by any of the processing units. These instructions may include control logic for performing power negotiation, monitoring power measurements, and dynamically adjusting the power budget. The memory may include random access memory (RAM), read-only memory (ROM), flash memory, or any other suitable type of memory for storing software and data relevant to power management operations.

The system may further comprise any of: internal and external network interfaces, input and/or output ports, wireless communication modules, or other peripheral devices. The power sourcing equipment and the powered device may also include processing units that operate as single processors, multi-core processors, or multiprocessor configurations, depending on the complexity of the power management functionality. The processing unit of the powered device may interact with other system components, such as hardware accelerators, power controllers, or dedicated power regulation circuits, to ensure efficient power distribution.

The power sourcing equipment and/or the system may include a communication interface that facilitates data exchange between system components and external devices. The communication interface may enable wired or wireless communication, allowing software and data to be transferred to and from the system via electrical, optical, or RF signals. The communication interface may include standard Ethernet interfaces, serial communication ports, or wireless transceivers for enabling remote configuration, monitoring, or firmware updates.

The power sourcing equipment and/or the powered device may also incorporate power regulation circuitry, which ensures that power delivery remains stable and within allocated budgets. The power regulation components may include voltage regulators, current sensors, and protective circuits that prevent overvoltage or excessive power draw. The system may also include diagnostic modules configured to monitor power efficiency trends, detect anomalies in power transmission, and optimize power usage based on real-time conditions.

As would be understood by a person skilled in the art, any of the functional components described herein may be implemented in hardware, software, firmware, or any combination thereof. The method steps may be executed by dedicated circuitry, programmable logic, or general-purpose processing units capable of performing power management tasks. The system may be configured to operate autonomously or under external control, allowing integration into larger network management systems.

The described implementations are not limited to any specific hardware architecture or PoE standard and may be adapted to various midspan and endspan configurations, supporting different power levels as defined in industry specifications.

### List of elements in figures

100 - method of controlling power usage
101 - performing a power negotiation
102 - drawing power from the power sourcing equipment to the powered device within the initial power budget
103 - measuring an output power
104 - measuring an actual power consumption
105 - calculating a power efficiency ratio
106 - setting an adjusted power budget
107 - drawing power from the power sourcing equipment to the powered device within the adjusted power budget
200 - System for controlling power usage
201 - Ethernet cable
202 - Ethernet socket
203 - PoE pairs
300 - Power sourcing equipment
301 - AC/DC converter
302 - power over ethernet manager module
303 - PSE power measurement unit
304 - PSE Ethernet interface
400 - Powered device
401 - PD Ethernet interface
402 - processing unit
403 - PD power measurement unit
404 - power consuming unit

## Claims

1. A method of controlling power usage in a powered device supplied by a power sourcing equipment in a Power over Ethernet system, the method comprising:
performing a power negotiation between the power sourcing equipment and the powered device to determine an initial power budget, wherein the initial power budget accounts for assumed transmission and/or conversion losses between the power sourcing equipment and the powered device;
drawing power from the power sourcing equipment to the powered device within the initial power budget;
measuring, at the power sourcing equipment, an output power supplied to the powered device;
measuring, at the powered device, an actual power consumption in the powered device;
calculating a power efficiency ratio between the output power and the actual power consumption;
setting an adjusted power budget for the powered device by scaling the initial power budget using the power efficiency ratio; and
drawing power from the power sourcing equipment to the powered device within the adjusted power budget.

2. The method of controlling power usage according to claim 1, wherein the initial power budget and the adjusted power budget define upper limits for a power consumption.

3. The method of controlling power usage according to any one of the preceding claims, wherein the initial power budget and the adjusted power budget represent measures of instantaneous power consumption, preferably expressed in watts or an equivalent unit.

4. The method of controlling power usage according to any one of the preceding claims, wherein the initial power budget is assigned through a power negotiation process between the power sourcing equipment and the powered device in accordance with a Power over Ethernet standard.

5. The method of controlling power usage according to any one of the preceding claims, wherein drawing power from the power sourcing equipment to the powered device comprises enabling and disabling functions of the powered device based on their respective power requirements to maintain a total power consumption within the limits of the applicable one of the initial power budget or the adjusted power budget.

6. The method of controlling power usage according to any one of the preceding claims, comprising allocating power sub-budgets to a plurality of functions of the powered device, such that a total power allocated to the functions initially does not exceed the initial power budget.

7. The method of controlling power usage according to claim 6, wherein the power sub-budgets are updated after setting the adjusted power budget such that the total power allocated to the functions does not exceed the adjusted power budget.

8. The method of controlling power usage according to any one of the preceding claims, wherein the steps of measuring the output power, measuring the actual power consumption, calculating the power efficiency ratio, setting the adjusted power budget, and drawing power in accordance with the adjusted power budget are performed iteratively during operation of the powered device.

9. The method of controlling power usage according to claim 8, wherein the steps of measuring the output power, measuring the actual power consumption, calculating the power efficiency ratio and setting the adjusted power budget are performed at predetermined intervals.

10. The method of controlling power usage according to claim 8, wherein the steps of measuring the output power, measuring the actual power consumption and calculating the power efficiency ratio are performed substantially continuously.

11. The method of controlling power usage according to claim 10, wherein the step of setting the adjusted power budget is performed in response to detecting a change in the power efficiency ratio exceeding a predefined threshold.

12. The method of controlling power usage according to any one of the preceding claims, comprising the step of communicating the output power supplied to the powered device from the power sourcing equipment to the powered device.

13. The method of controlling power usage according to any one of the preceding claims, wherein the powered device comprises a camera system and the power sourcing equipment is a midspan device.

14. A system for controlling power usage in a powered device supplied by a power sourcing equipment in a Power over Ethernet system, comprising:
a power sourcing equipment configured to supply power to the powered device and to perform a power negotiation with the powered device to determine an initial power budget, wherein the initial power budget accounts for assumed transmission and/or conversion losses between the power sourcing equipment and the powered device;
a PSE power measurement unit in the power sourcing equipment configured to measure an output power supplied to the powered device;
a PD power measurement unit in the powered device configured to measure an actual power consumption in the powered device;
a processing unit configured to:
configure the powered device to draw power from the power sourcing equipment within the initial power budget;
calculate a power efficiency ratio between the output power and the actual power consumption;
set an adjusted power budget for the powered device by scaling the initial power budget using the power efficiency ratio; and
configure the powered device to draw power from the power sourcing equipment within the adjusted power budget.

15. A powered device for use in a Power over Ethernet system, the powered device comprising:
a power interface configured to receive power from a power sourcing equipment and to participate in a power negotiation with the power sourcing equipment to determine an initial power budget, wherein the initial power budget accounts for assumed transmission and/or conversion losses between the power sourcing equipment and the powered device;
a PD power measurement unit configured to measure an actual power consumption in the powered device;
a processing unit configured to:
configure the powered device to draw power from the power sourcing equipment within the initial power budget;
receive a measurement of an output power supplied to the powered device from the power sourcing equipment
calculate a power efficiency ratio between the output power and the actual power consumption;
set an adjusted power budget for the powered device by scaling the initial power budget using the power efficiency ratio; and
configure the powered device to draw power from the power sourcing equipment within the adjusted power budget.
